# FASCICULE DE BREVET EUROPEEN

(11) **EP 1 051 787 B1**
(45) Date de publication et mention de la délivrance du brevet: **24.07.2002**
(21) Numéro de dépôt: 99901526.6
(22) Date de dépôt: 26.01.1999
(51) Int. Cl.: H02H 7/122

(54) **PROCEDE DE SYMETRISATION DE DEFAUTS ASYMETRIQUES**
VERFAHREN ZUM SYMMETRIEREN EINES ASYMMETRISCHEN FEHLERS
METHOD FOR SYMMETRIZING ASYMMETRIC FAULTS

(30) Priorité: 28.01.1998 EP 98870017
(43) Date de publication de la demande: 15.11.2000
(73) Titulaire: Alstom Belgium S.A., 6001 Charleroi (BE)
(72) Inventeur: MASSELUS, Jean-Emmanuel, B-6032 Mont-Sur-Marchienne (BE); COLASSE, Alexis, B-5100 Jambes (BE); BODSON, Jean-Marie, B-1300 Wavre (BE)
(74) Mandataire: Van Malderen, Joelle
(86) Numéro de dépôt international: BE9900010
(87) Numéro de publication internationale: WO9939418

(56) Documents cités:
- GB-A- 2 309 597
- PATENT ABSTRACTS OF JAPAN vol. 014, no. 346 (E-0956), 26 juillet 1990 & JP 02 119530 A (SANKEN ELECTRIC CO LTD), 7 mai 1990

## Description

### Objet de l'invention

La présente invention vise à proposer un procédé de symétrisation de défauts asymétriques pouvant survenir au sein d'une chaîne de traction comprenant un moteur synchrone ou asynchrone commandé par un onduleur de tension.

### Etat de la technique

Les onduleurs, et plus particulièrement les onduleurs de tension, sont destinés à fournir une tension alternative à partir d'une tension continue.

Un domaine d'application particulièrement important est la commande en vitesse variable de machines synchrones ou asynchrones.

Dans ce cas, il est nécessaire de fournir à la charge, qui peut être représentée par chaque phase d'un moteur synchrone ou asynchrone, un système triphasé en tension le plus proche possible d'un système triphasé sinusoïdal équilibré variable en fréquence et en amplitude. L'onduleur de tension est un dispositif qui permet d'atteindre ce but, et formé d'interrupteurs statiques utilisant des composants de puissance tels que des thyristors. Jusqu'il y a peu, parmi ces composants de puissance, on utilisait essentiellement des semi-conducteurs tels que des thyristors, des GTO, etc.

Depuis quelque temps sont apparus de nouveaux types de commutateurs statiques qui peuvent être définis sous le vocable "IGBT" (Insulated Gate Bipolar Transistor). Ces dispositifs sont des composants contrôlables, en ce sens que l'on peut à tout moment imposer le courant que l'on veut dans l'interrupteur en ajustant la tension sur sa grille de commande, tandis que pour les interrupteurs de l'ancienne génération représentés par exemple par les GTO ou similaires, on peut uniquement décider du moment de leur allumage et du moment de leur extinction.

La présente invention se rapporte plus particulièrement aux onduleurs utilisant des composants de puissance de la nouvelle génération tels que des IGBT ou même des transistors bipolaires.

Lorsqu'un semi-conducteur est en court-circuit (défaillance d'un semi-conducteur) dans un onduleur à deux niveaux, la phase correspondante du moteur est reliée en permanence soit au point haut de l'onduleur, soit au point bas de ce dernier à condition que le semi-conducteur situé sur la même branche soit bloqué, sinon c'est toute la branche qui est en court-circuit, ce qui revient à mettre l'entrée et les sorties de l'onduleur en court-circuit. A ce moment, le fait de bloquer le reste de l'onduleur en éteignant tous les semi-conducteurs sains va mettre le moteur dans une configuration électrique susceptible (cela dépend de l'instant du défaut) de générer un surcouple transitoire à l'arbre moteur, entraînant le bris de la transmission mécanique.

La solution à ce problème est de provoquer un court-circuit triphasé symétrique aux bornes du moteur. Pour ce faire, plusieurs possibilités existent.

Dans le cas particulier d'une mise en court-circuit d'un moteur asynchrone, il est connu notamment par le document SU-1350783 d'effectuer la mise en court-circuit simultanée sur toutes les phases d'un moteur, ceci afin d'éviter un défaut asymétrique, c'est-à-dire un défaut connectant une phase au point haut et au point bas de l'alimentation de l'onduleur. Il est nécessaire de réaliser un court-circuit triphasé symétrique du moteur asynchrone de manière à ne pas solliciter exagérément la transmission mécanique par des surcouples engendrés par des courts-circuits asymétriques.

La solution la plus simple consiste à allumer simultanément tous les semi-conducteurs de l'onduleur entraînant ainsi la mise en court-circuit du condensateur d'entrée de l'onduleur. Cependant, dans ce cas, les semi-conducteurs doivent être dimensionnés pour pouvoir supporter le courant de court-circuit du condensateur de tête en plus du courant de court-circuit du moteur. Ceci est possible avec des onduleurs à GTO, car le courant dans ces transistors est limité par des inductances de limitation (di/dt). Malheureusement, dans le cas d'onduleurs à IGBT, l'emploi de bus bars à faible inductance entre le condensateur de tête de l'onduleur et les IGBT conduit à ce que le courant n'est pas limité par des inductances comme c'est le cas pour des GTO. De plus, l'IGBT limite lui-même son courant de collecteur en désaturant. Ces deux raisons font que cette stratégie n'est pas facilement transposable à des onduleurs à IGBT.

D'autre part, des dispositifs de protection pour onduleurs deux niveaux à IGBT alimentant un moteur à vitesse variable existent dans l'industrie. Le document GB-A-2309597 fait le point sur l'état de la technique à ce sujet.

Les dispositifs en question utilisent des circuits de détection de désaturation des IGBT pour détecter un défaut à l'intérieur ou à la sortie de l'onduleur et à bloquer l'onduleur.

L'inconvénient de ces dispositifs est qu'ils sont susceptibles d'engendrer un défaut asymétrique sur le moteur asynchrone alimenté par l'onduleur protégé par ces mêmes dispositifs.

### Buts de l'invention

La présente invention vise à proposer un procédé de protection d'une chaîne de traction synchrone ou asynchrone, équipée d'un onduleur de tension, lui-même formé à partir d'interrupteurs statiques constitués de semi-conducteurs, et qui résout le problème de tenue en courant desdits semi-conducteurs.

La présente invention vise plus particulièrement à pouvoir limiter le couple d'un moteur synchrone ou asynchrone alimenté par un onduleur de tension à deux niveaux ou multi-niveaux généré lors d'un défaut localisé à l'intérieur ou à l'extérieur de l'onduleur alimentant le moteur.

La présente invention vise donc à proposer une stratégie de protection globale de la chaîne de traction qui permette de symétriser un court-circuit asymétrique à la sortie d'un onduleur de tension sans endommager ce dernier.

### Principaux éléments caractéristiques de l'invention

La présente invention se rapporte à un procédé de symétrisation d'un défaut asymétrique pouvant survenir au sein d'une chaîne de traction comprenant un moteur synchrone ou asynchrone commandé par un onduleur de tension à deux niveaux ou multi-niveaux formé d'interrupteurs statiques utilisant des semi-conducteurs tels que des IGBT ou transistors bipolaires, selon lequel on détecte si le défaut relie ou risque de relier une phase moteur au point haut ou au point bas de l'alimentation de l'onduleur, et en ce que l'on court-circuite uniquement la moitié de l'onduleur présentant le défaut en fonction du résultat de la détection.

La présente invention se rapporte plus précisément à un procédé de protection dans lequel on relie toutes les phases de l'onduleur de tension en permanence au point haut ou au point bas de l'onduleur, en provoquant un court-circuit triphasé symétrique à la sortie de cet onduleur sans provoquer de court-circuit sur son entrée après détection et localisation d'un défaut. Ceci signifie que toutes les phases du moteur sont connectées au point haut de l'alimentation de l'onduleur, si le défaut est tel qu'il connecte au moins une phase moteur au point haut de l'alimentation de l'onduleur, et que toutes les phases du moteur sont connectées au point bas de l'alimentation de l'onduleur, si le défaut est tel qu'il connecte au moins une phase moteur au point bas de l'alimentation de l'onduleur, ceci étant réalisé sans provoquer de court-circuit sur l'entrée de l'onduleur.

Selon la forme d'exécution utilisant un onduleur à deux niveaux, on localise le défaut en utilisant le principe de la détection de désaturation du semi-conducteur IGBT.

Selon la forme d'exécution utilisant un onduleur à trois niveaux ou plus, on localise le défaut en utilisant les principes de la détection de désaturation et de la détection d'écrêtage actif du semi-conducteur IGBT.

### Brève description des figures

- Les figures 1, 2 et 3: représentent les différentes étapes du procédé de l'invention dans le cas d'un onduleur à deux niveaux relié aux trois phases d'un moteur asynchrone.
- Les figures 4, 5 et 6: représentent les différentes étapes du procédé de l'invention dans le cas d'un onduleur à trois niveaux relié aux trois phases d'un moteur asynchrone.

### Description détaillée de plusieurs formes d'exécution de la présente invention

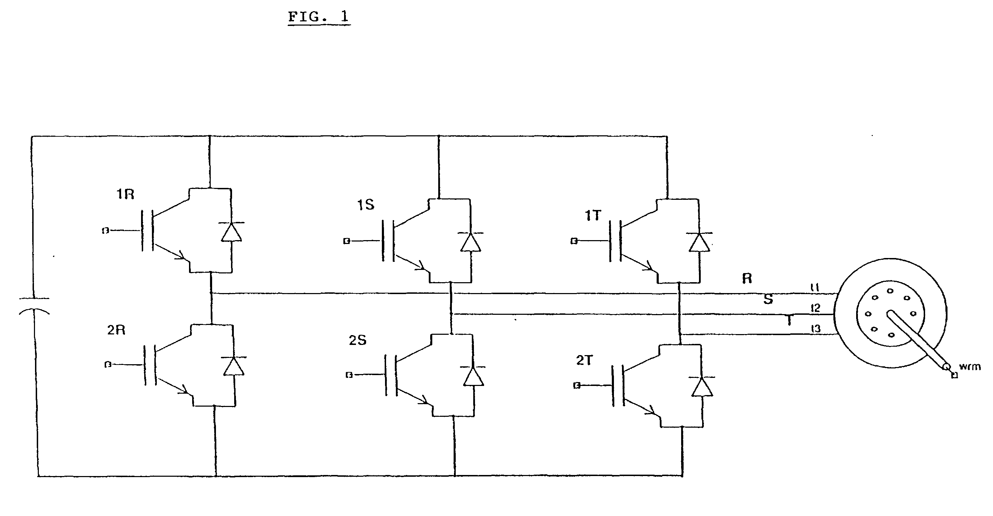

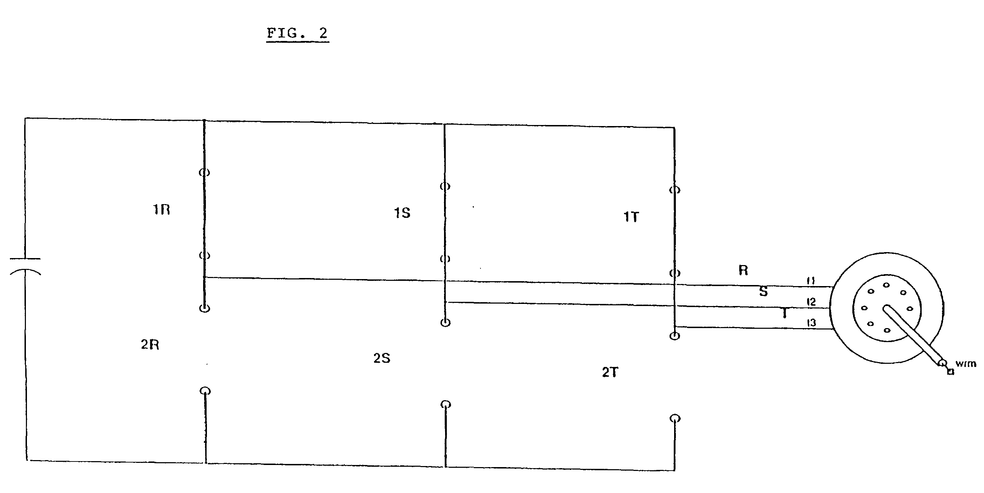

La figure 1 représente schématiquement un onduleur à deux niveaux relié aux trois phases moteur R, S et T d'un moteur asynchrone M.

Cette figure représente de manière schématique les trois branches d'un onduleur conventionnel à deux niveaux qui est utilisé dans le cadre de la présente invention. De manière classique, chaque branche de cet onduleur comprend deux interrupteurs I1 (R, S, T) ou I2 (R, S, T), qui alimentent alternativement une charge qui est représentée par une phase du moteur asynchrone M.

Dans ce cas particulier, la charge est de type selfique, et il est nécessaire que les deux interrupteurs de chaque branche soient montés en parallèle avec une diode que l'on appelle "diode de roue libre" (Dl ou D2), qui permet au courant de charge de circuler lorsque l'interrupteur correspondant est ouvert. La présence de cette diode permet au courant de charge inductif de décroître et d'éviter ainsi toute surtension destructive lorsque l'interrupteur correspondant est ouvert.

### Application à l'onduleur à deux niveaux

Dans le cas de l'utilisation d'interrupteurs d type IGBT (contrairement aux interrupteurs de type GO), le reblocage est permis lors de l'allumage du semi-conducteur sur un court-circuit ou lorsqu'un court-circuit survient alors que l'IGBT était allumé. En effet, l'IGBT limite intrinsèquement son courant de collecteur à un courant de l'ordre de 3 à 6 fois son courant nominal. On appelle ce phénomène la "désaturation".

La détection de désaturation de l'IGBT permet de détecter un court-circuit, et se réalise par comparaison de la valeur V_{ce} (collecteur - émetteur) aux bornes de l'IGBT avec une tension de référence générée en interne dans l'allumeur qui commande l'IGBT. Si la tension V_{ce} mesurée est supérieure à cette tension de référence, l'allumeur le détecte et peut éventuellement rebloquer automatiquement l'IGBT dont l'allumage avait été commandé et renvoyer un signal à l'électronique de commande, indiquant qu'un court-circuit a été détecté.

L'électronique de contrôle commande l'extinction des IGBT situés sur le même demi-onduleur et commande l'allumage des autres IGBT.

Supposons par exemple que cette électronique de commande reçoive l'information suivante : interrupteur 1R a été rebloqué par l'allumeur suite à une détection de désaturation. Ceci signifie que le court-circuit connecte la phase R au point le plus bas de l'onduleur. L'action que prendra l'électronique de commande sera d'allumer les interrupteurs 2R, 2S et 2T.

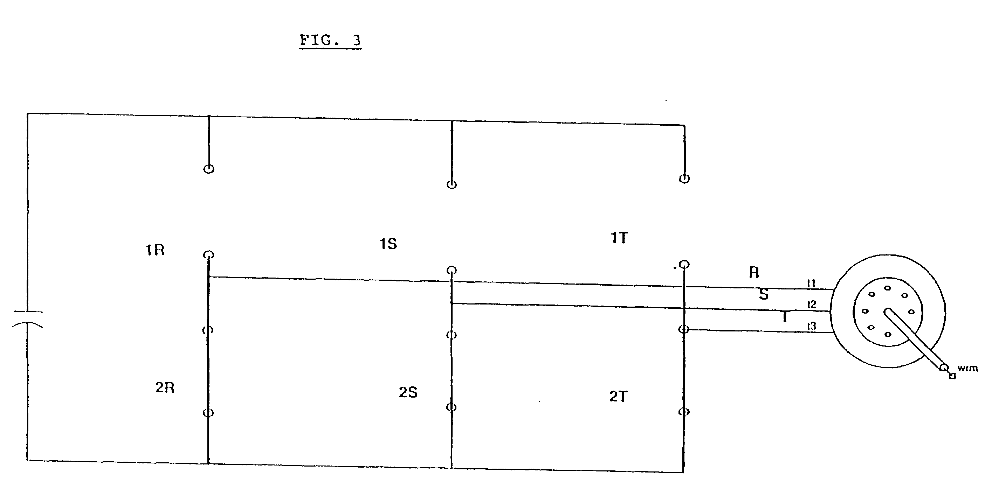

Les figures 2 et 3 représentent de manière schématique la mise en court-circuit d'une seule des deux parties de l'onduleur.

Plus particulièrement, dans la figure 2, la partie supérieure de l'onduleur est mise en court-circuit. Dans ce cas, l'électronique de commande envoie des ordres d'ouverture aux interrupteurs I2R, I2S et I2T, et des ordres d'allumage aux interrupteurs I1R, I1S et I1T. Les interrupteurs I1R, I1S et I1T étant reliés entre eux par leurs collecteurs, leur allumage simultané court-circuite entre elles les trois phases du moteur R, S et T. La tension du condensateur d'entrée C est reprise par les interrupteurs I2R, I2S et I2T.

Dans la figure 3, la partie inférieure de l'onduleur est mise en court-circuit. Dans ce cas, l'électronique de commande envoie des ordres d'ouverture aux interrupteurs I1R, I1S et I1T, et des ordres d'allumage aux interrupteurs I2R, I2S et I2T. Les interrupteurs I2R, I2S et I2T sont reliés entre eux par leurs émetteurs, leur allumage simultané court-circuite entre elles les trois phases du moteur R, S et T. La tension du condensateur d'entrée C est reprise par les interrupteurs I1R, I1S et I1T.

### Application à l'onduleur à trois niveaux

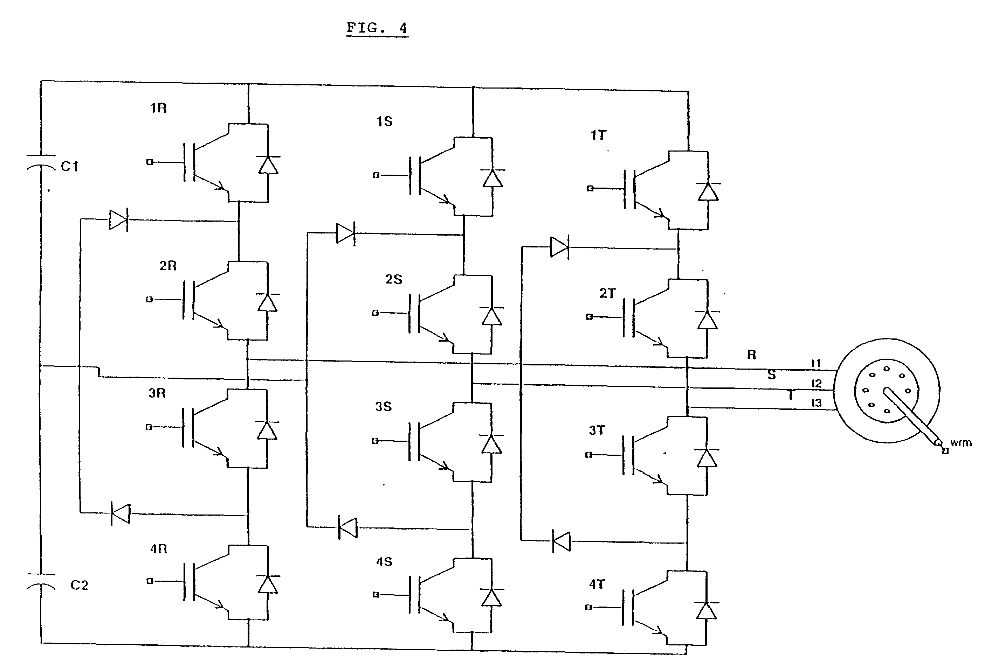

La figure 4 représente un onduleur à trois niveaux relié aux trois phases d'un moteur asynchrone. Chacune des trois branches de l'onduleur est composée de quatre interrupteurs I1, I2, I3 et I4 (R, S, T respectivement), qui sont allumés ou éteints 2 à 2 afin d'alimenter alternativement la charge constituée par la phase du moteur asynchrone.

A nouveau, sur chaque interrupteur est disposée une diode de roue libre D1 ou D2 afin de permettre au courant de circuler lorsque les interrupteurs correspondants sont ouverts.

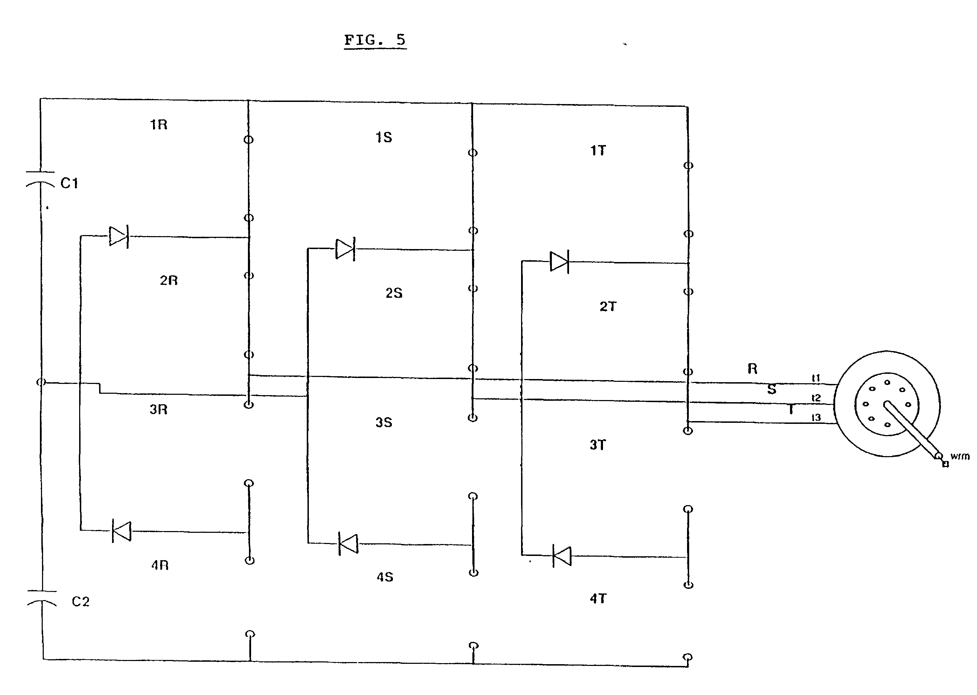

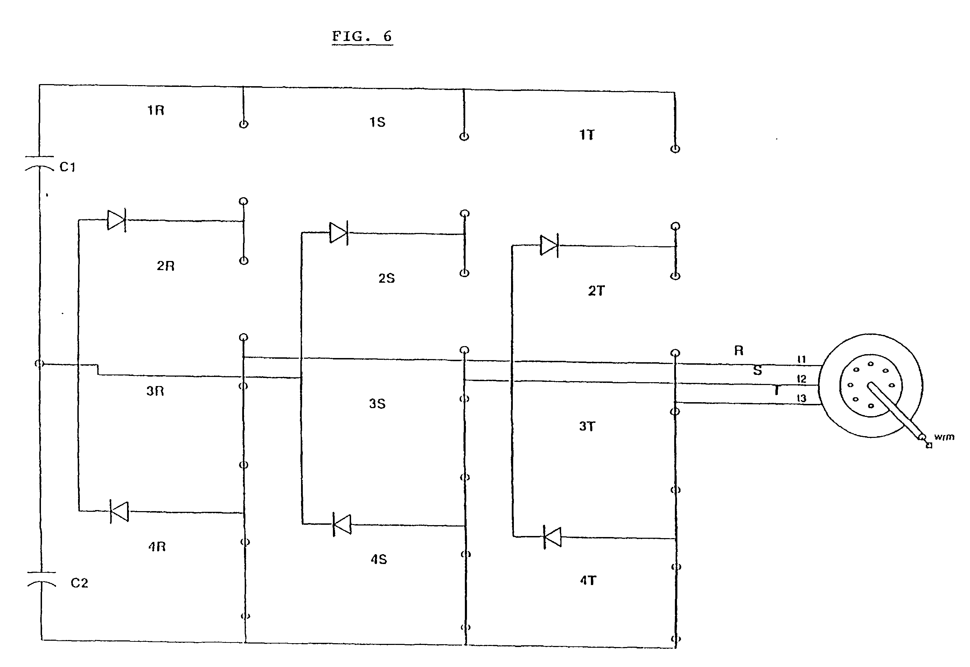

La figure 5 représente la mise en court-circuit de la partie supérieure de l'onduleur, tandis que la figure 6 représente la mise en court-circuit de la partie inférieure de l'onduleur.

Lorsqu'un semi-conducteur est en court-circuit dans un onduleur à trois niveaux, le problème est plus complexe que dans le cas d'un onduleur à deux niveaux.

Le défaut ne relie pas systématiquement la phase correspondante au point haut ou au point bas de l'onduleur. Par exemple, si c'est un semi-conducteur qui est en défaut et si le semi-conducteur en court-circuit est un semi-conducteur intérieur, il y a possibilité de bloquer les semi-conducteurs sains sans provoquer de surcouple à l'arbre moteur.

Par contre, dans les cas où le défaut entraîne le passage d'une phase au point haut de l'onduleur ou à son point bas, la procédure de mise en court-circuit est d'application.

La stratégie de protection est donc la suivante :
- Si une désaturation est détectée sur un IGBT, l'électronique commande le blocage de tous les IGBT de l'onduleur.
- Si un IGBT intérieur voit une surtension, l'allumeur correspondant le protège et renvoie une information surtension à l'électronique de commande qui commande l'allumage des IGBT du même demi-onduleur et commande l'extinction des autres IGBT.

A titre d'exemple, envisageons un défaut entraînant le passage d'une phase au point haut de l'onduleur.

L'IGBT 1R est allumé commandé par l'électronique de commande mais il est néanmoins en court-circuit. L'IGBT est commandé allumé commandé et le courant de charge est un courant sortant de l'onduleur. Les IGBT 3R et 4R sont éteints.

L'étape suivante du fonctionnement de l'onduleur à trois niveaux consiste normalement à éteindre l'IGBT 1R et à allumer l'IGBT 3R.
Que se passe-t-il alors?
1) L'IGBT 1R ne va pas s'éteindre puisqu'il est défectueux.
2) L'IGBT 3R va s'allumer et provoquer le court-circuit de la boucle C1, 1R, 2R, 3R, diode.
3) L'IGBT 2R et/ou l'IGBT 3R va désaturer et l'allumeur correspondant va bloquer son IGBT en renvoyant l'information à l'électronique de commande.
4) L'électronique de commande va demander le blocage de tous les IGBT de l'onduleur. Tous les IGBT vont se bloquer sauf l'IGBT 1R.
5) Le collecteur de l'IGBT 2R est relié au point haut de l'onduleur.
6) Le courant de la phase R étant sortant, il est impossible de bloquer froidement l'IGBT R2 sans le casser par surtension (puisqu'en bloquant, il va faire provoquer la mise en conduction des diodes antiparallèles 3R et 4R). Or, l'électronique de commande a donné l'ordre de bloquer tous les IGBT.
7) La solution adoptée pour éviter de casser l'IGBT R2 est d'installer une protection contre les surtensions par écrêtage actif sur tous les allumeurs. En cas de surtension, l'écrêtage actif limite automatiquement la tension V_{ce} des IGBT à une valeur prédéterminée et informe l'électronique de commande si la surtension dure trop longtemps. L'électronique de commande prend alors la décision d'envoyer un ordre d'allumage au demi-onduleur correspondant à l'IGBT qui a surtensionné.

La figure 5 représente la mise en court-circuit de la partie supérieure de l'onduleur, tandis que la figure 6 représente la mise en court-circuit de la partie inférieure de l'onduleur.

Ainsi que représenté à la figure 5, les interrupteurs I1R, I1S et I1T étant reliés entre eux par leurs émetteurs, et leurs collecteurs respectifs étant reliés aux interrupteurs I2R, I2S et I2T, le fait d'allumer les interrupteurs I1R, I1S, I1T, I2R, I2S et I2T court-circuite entre elles les trois phases moteur R, S et T. La tension des condensateurs d'entrée est reprise par les interrupteurs I3R, I3S, I3T, I4R, I4S et I4T.

Dans le cas de la mise en court-circuit de la partie inférieure, tel que représenté à la figure 6, les interrupteurs I4R, I4S et I4T étant reliés entre eux par leurs émetteurs, et leurs collecteurs respectifs étant reliés aux interrupteurs I3R, I3S et I3T, le fait d'allumer les interrupteurs I3R, I3S, I3T, I4R, I4S et I4T court-circuite entre elles les trois phases moteur R, S et T. La tension du condensateur d'entrée est reprise par les interrupteurs I1R, I1S, I1T, I2R, I2S et I2T.

## Revendications

1. Procédé de symétrisation d'un défaut asymétrique pouvant survenir au sein d'une chaîne de traction comprenant un moteur synchrone ou asynchrone commandé par un onduleur de tension à deux niveaux ou multi-niveaux formé d'interrupteurs statiques utilisant des semi-conducteurs tels que des IGBT ou transistors bipolaires, **caractérisé en ce que** l'on détecte si le défaut relie ou risque de relier une phase moteur au point haut ou au point bas de l'alimentation de l'onduleur, et **en ce que** l'on court-circuite uniquement la moitié de l'onduleur présentant le défaut en fonction du résultat de la détection.

2. Procédé selon la revendication 1, **caractérisé en ce que** l'on relie toutes les phases de l'onduleur de tension en permanence au point haut ou au point bas de l'onduleur, en provoquant un court-circuit triphasé symétrique à la sortie de cet onduleur sans provoquer de court-circuit sur son entrée après détection et localisation d'un défaut.

3. Procédé selon la revendication 2, **caractérisé en ce que** toutes les phases du moteur sont connectées au point haut de l'alimentation de l'onduleur, si le défaut est tel qu'il connecte au moins une phase moteur au point haut de l'alimentation de l'onduleur, et que toutes les phases du moteur sont connectées au point bas de l'alimentation de l'onduleur, si le défaut est tel qu'il connecte au moins une phase moteur au point bas de l'alimentation de l'onduleur, ceci étant réalisé sans provoquer de court-circuit sur l'entrée de l'onduleur.

4. Procédé selon la revendication 3, **caractérisé en ce que** l'on localise le défaut dans un onduleur à deux niveaux en utilisant le principe de la détection de désaturation du semi-conducteur IGBT.

5. Procédé selon la revendication 3, **caractérisé en ce que** l'on localise le défaut dans un onduleur à trois niveaux en utilisant les principes de la détection de désaturation et de la détection d'écrêtage actif du semi-conducteur IGBT.

## Claims

1. A method for symmetrizing an asymmetric fault that may occur within a tractive string comprising a synchronous or an asynchronous motor controlled by a two-leveled or multi-leveled voltage inverter with static switches using semiconductors such as IGBT or bipolar transistors, **characterized in that** it is detected whether the fault connects or is able to connect a motor phase at the high or low point of the inverter supply, and **in that** only half the inverter which presents the fault as a function of the detection result is shorted.

2. The method according to claim 1, **characterized in that** every phase in the volatge inverter is permanently connected at the high or low point of the inverter, causing a symetrical three-phase short-circuit at the outlet of said inverter without causing any short-circuit at the inlet thereof after detecting and locating a fault.

3. The method according to claim 2, **characterized in that** every motor phase is connected at the high point of the inverter supply, if the fault is such that it connects at least one motor phase at the high point of the inverter supply and **in that** every motor phase is connected at the low point of the inverter supply, if the fault is such that it connects at least one motor phase at the low point of the inverter phase, this being performed without causing any short-circuit at the inverter inlet.

4. The method according to claim 3, **characterized in that** the fault is located within a two-leveled inverter using the desaturation detection principle of the IGBT semiconductor.

5. The method according to claim 3, **characterized in that** the fault is located within a three-leveled inverter using the principles of the desaturation detection and of the active clipping detection in the IGBT semiconductor.

## Patentansprüche

1. Symmetrierungsverfahren für einen asymmetrischen Fehler, welcher bei einem Zugstrang auftreten kann, der aus einem von einem zwei- oder mehrstufigen Spannungswechselrichter gesteuerten Synchron- oder Asynchronmotor besteht, wobei der Spannungswechselrichter aus statischen Schaltern gebildet wird, die Halbleiter wie z.B. IGBT oder bipolare Transistoren benutzen, **dadurch gekennzeichnet, dass** es detektiert wird, ob durch den Fehler eine Motorphase mit dem Hoch- oder Tiefpunkt der Stromversorgung des Wechselrichters verbunden wird bzw. die Gefahr dafür besteht und dadurch, dass man in Abhängigkeit vom Detektionsergebnis nur die Hälfte des den Fehler aufweisenden Wechselrichters kurzschliesst.

2. Verfahren nach Anspruch 1, **dadurch gekennzeichnet, dass** man dauernd alle Phasen des Spannungswechselrichters an den Hoch- oder Tiefpunkt des Wechselrichters anschliesst, wodurch ein dreiphasiger symmetrischer Kurzschluss am Ausgang dieses Wechselrichters hervorgerufen wird, ohne nach Detektion und Lokalisierung eines Fehlers einen Kurzschluss an seinem Eingang zu erzeugen.

3. Verfahren nach Anspruch 2, **dadurch gekennzeichnet, dass** alle Phasen des Motors an den Hochpunkt der Stromversorgung des Wechselrichters angeschlossen werden, wenn der Fehler derart gestaltet ist, dass durch ihn mindestens eine Motorphase an den Hochpunkt der Stromversorgung des Wechselrichters angeschlossen wird und dass alle Phasen des Motors an den Tiefpunkt der Stromversorgung des Wechselrichters angeschlossen werden, wenn der Fehler derart gestaltet ist, dass durch ihn mindestens eine Motorphase an den Tiefpunkt der Stromversorgung des Wechselrichters angeschlossen wird, wobei das ausgeführt wird, ohne einen Kurzschluss am Eingang des Wechselrichters zu erzeugen.

4. Verfahren nach Anspruch 3, **dadurch gekennzeichnet, dass** den Fehler in einem zweistufigen Wechselrichter lokalisiert wird, indem das Prinzip der Detektion der Entsättigung des IGBT-Halbleiters benutzt wird.

5. Verfahren nach Anspruch 3, **dadurch gekennzeichnet, dass** den Fehler in einem dreistufigen Wechselrichter lokalisiert wird, indem die Prinzipien der Detektion der Entsättigung und der Detektion der aktiven Begrenzung des IGBT-Halbleiters benutzt werden.
